# EUROPÄISCHE PATENTSCHRIFT

(11) **EP 0 933 860 B1**
(45) Veröffentlichungstag und Bekanntmachung des Hinweises auf die Patenterteilung: **02.01.2002**
(21) Anmeldenummer: 99101980.3
(22) Anmeldetag: 01.02.1999
(51) Int. Cl.: H02H 9/06, H01T 2/02

(54) **Überspannungsschutzsystem**
Overvoltage protection system
Système de protection contre les surtensions

(30) Priorität: 02.02.1998 DE 19803636
(43) Veröffentlichungstag der Anmeldung: 04.08.1999
(73) Patentinhaber: PHOENIX CONTACT GmbH & Co., 32825 Blomberg (DE)
(72) Erfinder: Danowsky, Volker, 32427 Minden (DE); Lehmann, Eberhard, 24103 Kiel (DE); Scheibe, Klaus, Prof. Dr., 24103 Kiel (DE); Schimanski, Joachim, 32760 Detmold (DE); Wosgien, Joachim, 32584 Löhne (DE)
(74) Vertreter: Gesthuysen, von Rohr & Eggert

(56) Entgegenhaltungen:
- WO-A-96/17419
- DE-A- 4 402 615
- DE-A- 4 435 968
- DE-A- 4 439 730
- DE-C- 164 747
- US-A- 3 275 891

## Beschreibung

Die Erfindung betrifft ein Überspannungsschutzsystem mit einem Überspannungsschutzelement und einer das Überspannungsschutzelement auslösenden Zündhilfe, wobei das Überspannungsschutzelement zwei Hauptelektroden und eine zwischen den Hauptelektroden wirksame Luft-Durchschlag-Funkenstrecke aufweist, als Zündhilfe ein Zündkreis mit einem Zündspannungsausgang vorgesehen ist, das Überspannungsschutzelement eine zwischen den Hauptelektroden wirksame Zündfunkenstrecke mit mindestens einer Zündelektrode aufweist und die Zündelektrode an den Zündspannungsausgang des Zündkreises angeschlossen ist, der Zündkreis einen Zündkondensator, ein Zündschaltelement sowie einen Zündtransformator aufweist, der Zündkreis eine Eingangsschaltung aufweist und die Eingangsschaltung als ein den Zündkondensator aufweisender Spannungsteiler ausgebildet ist, so daß die über den Zündkondensator anliegende Spannung gegenüber der an der Eingangsschaltung anstehenden Spannung heruntergeteilt ist. Ein solches Überspannungsschutzsystem ist z. B. aus der DE 164 747 C bekannt.

Elektrische, insbesondere aber elektronische Meß-, Steuer-, Regel- und Schaltkreise, vor allem auch Telekommunikationseinrichtungen und -anlagen, sind empfindlich gegen transiente Überspannung, wie sie insbesondere durch atmosphärische Entladungen, aber auch durch Schalthandlungen und Kurzschlüsse in Energieversorgungsnetzen auftreten können. Diese Empfindlichkeit hat in dem Maße zugenommen, in dem elektronische Bauelemente, insbesondere Transistoren und Thyristoren, verwendet werden; vor allem sind zunehmend eingesetzte integrierte Schaltkreise in starkem Maße durch transiente Überspannungen gefährdet.

Um nun elektrische, insbesondere aber elektronische Meß-, Steuer-, Regel- und Schaltkreise, vor allem auch Telekommunikationseinrichtungen und -anlagen, ganz allgemein: wo auch immer eingesetzte elektronische Bauelemente, gegen transiente Überspannungen zu schützen, sind Überspannungsschutzelemente und Überspannungsschutzsysteme entwickelt worden und seit mehr als zwanzig Jahren bekannt (vgl. z. B. die deutschen Offenlegungsschriften bzw. Patentschriften 27 18 188, 29 34 236, 31 01 354, 36 39 533, 37 16 997, 38 12 058, 38 37 051, 39 05 427, 39 10 435, 41 41 681, 41 41 682, 42 36 584, 42 44 051, 44 02 615, 44 35 968 und 44 39 730).

Wesentlicher Bestandteil eines Überspannungsschutzsystems ist mindestens ein Überspannungsschutzelement, das anspricht bei einer bestimmten Überspannung (Ansprechspannung) und damit verhindert, daß in dem durch ein solches Überspannungsschutzelement geschützten Bereich Überspannungen auftreten, die größer als die Ansprechspannung des Überspannungsschutzelementes sind.

Zu Überspannungsschutzsystemen gehörende Überspannungsschutzelemente im weiteren Sinne sind auch gasgefüllte Überspannungsableiter, Induktivitäten, Widerstände und Varistoren (bzw. Bauelemente mit ähnlichen nichtlinearen Kennlinien), die als hybride Schaltungen Überspannungsschutzsysteme darstellen (vgl. die deutsche Offenlegungsschrift 42 36 584). Bei in Form von hybriden Schaltungen verwirklichten Überspannungsschutzsystemen spricht man auch von einem eingangsseitig vorgesehenen Grobschutzelement und einem ausgangsseitig vorgesehenen Feinschutzelement (vgl. z. B. die deutsche Offenlegungsschrift 39 05 427). Benutzt man die Differenzierung "Grobschutzelement" einerseits und "Feinschutzelement" andererseits, so handelt es sich bei dem Überspannungsschutzelement, das zu dem erfindungsgemäßen Überspannungsschutzsystem gehört, um ein Grobschutzelement.

Eingangs ist ausgeführt worden, daß das zu dem erfindungsgemäßen Überspannungsschutzsystem gehörende Überspannungsschutzelement zwei Hauptelektroden und eine zwischen den Hauptelektroden wirksame Luft-Durchschlag-Funkenstrecke aufweist (vgl. die deutschen Offenlegungsschriften bzw. Patentschrift 37 16 997, 41 41 681, 41 41 682, 42 44 051, 44 02 615, 44 35 968 und 44 39 730). Neben Überspannungsschutzelementen mit einer Luft-Durchschlag-Funkenstrecke gibt es Überspannungsschutzelemente mit einer Luft-Überschlag-Funkenstrecke, bei denen also beim Ansprechen eine Gleitentladung auftritt (vgl. die deutschen Offenlegungsschriften 27 18 188, 29 34 236 und 31 01 354).

Überspannungsschutzelemente mit einer Luft-Durchschlag-Funkenstrecke haben gegenüber Überspannungsschutzelementen mit einer Luft-Überschlag-Funkenstrecke den Vorteil einer höheren Stoßstromtragfähigkeit, jedoch den Nachteil einer höheren - und auch nicht sonderlich konstanten - Ansprechspannung. Folglich sind bereits verschiedene Überspannungsschutzelemente mit einer Luft-Durchschlag-Funkenstrecke entwickelt worden, die in bezug auf die Ansprechspannung verbessert worden sind (vgl. die deutschen Offenlegungsschrift 41 681, 41 41 682, 42 44 051. 44 02 615, 44 35 968 und 44 39 730). Dabei sind im Bereich der Hauptelektroden bzw. der zwischen den Hauptelektroden wirksamen Luft-Durchschlag-Funkenstrecken in verschiedener Weise Zündhilfen realisiert worden, - z. B. dergestalt, daß zwischen den Hauptelektroden mindestens eine eine Gleitentladung auslösende Zündhilfe vorgesehen ist, die teilweise in die Luft-Durchschlag-Funkenstrecke hineinragt, stegartig ausgeführt ist und aus Kunststoff besteht (vgl. die deutschen Offenlegungsschriften 41 41 681, 41 41 682, 42 36 584 und 44 02 615), wobei die Hauptelektroden mit Bohrungen versehen sein können, die dafür sorgen, daß im Augenblick des Ansprechens des Überspannungsschutzelemente, also des Zündens, der entstandene Lichtbogen neben den Bohrungen durch eine thermische und/oder elektrische und/oder magnetische Druck- und Kraftwirkung "in Fahrt gesetzt wird", also von seiner Entstehungsstelle wegwandert (vgl. die deutsche Offenlegungsschrift 44 02 615). Die bei bekannten Überspannungsschutzelementen vorgesehenen, zuvor angesprochenen Zündhilfen können gleichsam als "passive Zündhilfen" bezeichnet werden, - "passive Zündhilfen" deshalb, weil sie nicht selbst "aktiv" ansprechen, sondern nur durch eine Überspannung ansprechen, die an den Hauptelektroden auftritt.

Gegenstand der Erfindung ist nicht nur ein Überspannungsschutzsystem mit einem Überspannungsschutzelement, Gegenstand der Erfindung ist vielmehr auch ein Überspannungsschutzelement als solches, das in dem eingangs beschriebenen Überspannungsschutzsystem eingesetzt sein kann, jedoch auch in anderen Überspannungsschutzsystemen eingesetzt werden kann.

Weiter oben ist bereits darauf hingewiesen worden, daß Überspannungsschutzelemente mit einer Luft-Durchschlag-Funkenstrecke eine relativ hohe - und auch nicht sonderlich konstante - Ansprechspannung haben. Das gilt natürlich auch für Überspannungsschutzsysteme mit einem solchen Überspannungsschutzelement. Folglich liegt der Erfindung die Aufgabe zugrunde, ein im eingebauten Zustand an die jeweiligen Betriebsbedingungen anpaßbares Überspannungsschutzsystem anzugeben.

Das erfindungsgemäße Überspannungsschutzsystem, bei dem die zuvor hergeleitete und aufgezeigte Aufgabe gelöst ist, ist nun dadurch gekennzeichnet, daß der Zündkondensator einstellbar ist. Durch die Einstellbarkeit des Zündkondensators ist die Ansprechspannung des erfindungsgemäßen Überspannungsschutzsystems einstellbar, so daß z. B. die Möglichkeit besteht, werksseitige Bauteiltoleranzen durch entsprechende Einstellungen zu eliminieren. Darüber hinaus ermöglicht das erfindungsgemäße Überspannungschutzsystem selbst im eingebauten Zustand, d. h. ohne Austausch eines Bauteils, die Anpassung an veränderte Betriebsbedingungen.

Im einzelnen gibt es verschiedene Möglichkeiten, den bei dem erfindungsgemäßen Überspannungsschutzsystem vorgesehenen Zündkreis auszugestalten und weiterzubilden. Das wird unten in Verbindung mit Ausführungsbeispielen näher erläutert.

Für das zu dem erfindungsgemäßen Überspannungsschutzsystem gehörende Überspannungsschutzelement ist zunächst wesentlich, daß es zwei Hauptelektroden und eine zwischen den Hauptelektroden wirksame Luft-Durchschlag-Funkenstrecke aufweist und daß - in Verfolg der erfindungsgemäßen Lehre - zwischen den Hauptelektroden, also im Bereich der Luft-Durchschlag-Funkenstrecke, eine Zündfunkenstrecke mit mindestens einer Zündelektrode vorgesehen ist.

Ist bei dem zu dem erfindungsgemäßen Überspannungsschutzsystem gehörenden Überspannungsschutzelement nur eine Zündelektrode vorgesehen, so muß natürlich die - grundsätzlich zwei Zündelektroden benötigende - Zündfunkenstrecke zwischen der zusätzlich vorgesehenen Zündelektrode und einer der beiden Hauptelektroden verwirklicht sein. Bei einem solchen Überspannungsschutzelement mit drei Elektroden stellt dann eine Elektrode sowohl eine Hauptelektrode als auch eine Zündelektrode dar; eine Elektrode ist also funktional sowohl der Luft-Durchschlag-Funkenstrecke als auch der Zündfunkenstrecke zugeordnet.

Zum Stand der Technik gehört ein unter verschiedenen Gesichtspunkten besonders vorteilhaftes Überspannungsschutzelement, das zunächst in der deutschen Offenlegungsschrift 44 02 615 beschrieben ist, zu dem dann Ausgestaltungen und Weiterbildungen den deutschen Offenlegungsschriften 44 35 968 und 44 39 730 entnommen werden können.

Eine besonders bevorzugte Ausführungsform eines erfindungsgemäßen Überspannungsschutzsystems bzw. eines zu einem erfindungsgemäßen Überspannungsschutzsystem gehörenden Überspannungsschutzelementes zeichnet sich, wie durch die deutsche Offenlegungsschrift 44 02 615 bekannt, zunächst dadurch aus, daß jede Hauptelektrode einen Anschlußschenkel und ein unter einem spitzen Winkel zu dem Anschlußschenkel verlaufendes Funkenhorn aufweist, wobei die Funkenhörner der beiden - mit Abstand zueinander angeordneten - Hauptelektroden zusammen die Luft-Durchschlag-Funkenstrecke bilden.

Weiter oben ist ausgeführt, daß bei dem zu dem erfindungsgemäßen Überspannungsschutzsystem gehörenden Überspannungsschutzelement - zusätzlich zu den beiden Hauptelektroden - zwingend nur eine Zündelektrode vorgesehen sein muß. Vorzugsweise sind bei dem zu dem erfindungsgemäßen Überspannungsschutzsystem gehörenden Überspannungsschutzelement aber zwei Zündelektroden vorgesehen, - so daß die beiden Hauptelektroden nur der Luft-Durchschlag-Funkenstrecke, die beiden Zündelektroden nur der Zündfunkenstrecke zugeordnet sind.

Bei dem erfindungsgemäßen Überspannungsschutzsystem ist die Zündfunkenstrecke Teil der Zündhilfe, zu der - als "aktives Funktionsteil" - noch der Zündkreis gehört. Folglich muß die Zündfunkenstrecke in bezug auf die - durch die beiden Hauptelektroden gebildeten - Luft-Durchschlag-Funkenstrecke so realisiert sein, daß dadurch, daß die Zündfunkenstrecke angesprochen hat, die Luft-Durchschlag-Funkenstrecke anspricht. Das Ansprechen der Zündfunkenstrecke führt zu einer Ionisierung der in der Luft-Durchschlag-Funkenstrecke vorhandenen Luft, so daß - schlagartig - nach Ansprechen der Zündfunkenstrecke dann auch die Luft-Durchschlag-Funkenstrecke anspricht.

Das, was zuvor als funktionale Notwendigkeit zwischen der Zündfunkenstrecke und der Luft-Durchschlag-Funkenstrecke erläutert worden ist, läßt sich im einzelnen dadurch realisieren, daß die Zündfunkenstrecke - zumindest teilweise, vorzugsweise jedoch insgesamt - innerhalb der Luft-Durchschlag-Funkenstrecke realisiert ist, die Zündelektrode bzw. die Zündelektroden also zwischen den Hauptelektroden angeordnet ist bzw. angeordnet sind.

Weiter oben ist bereits ausgeführt worden, daß es im einzelnen verschiedene Möglichkeiten gibt, den bei dem erfindungsgemäßen Überspannungsschutzsystem vorgesehenen Zündkreis auszugestalten und weiterzubilden. Auch in bezug auf die Realisierung der bei dem erfindungsgemäßen Überspannungsschutzsystem bzw. der bei dem erfindungsgemäßen Überspannungsschutzelement vorgesehenen Zündfunkenstrecke gibt es verschiedene Möglichkeiten der Ausgestaltung und Weiterbildung. In bezug auf mögliche Ausgestaltungen und Weiterbildungen sowohl des Zündkreises als auch der Zündfunkenstrecke wird verwiesen einerseits auf die dem Patentanspruch 1 nachgeordneten Patentansprüche, andererseits auf bevorzugte Ausfiihrungsbeispiele, die in Verbindung mit der Zeichnung nachfolgend erläutert werden. In der Zeichnung zeigen
- Fig. 1: eine Prinzipskizze eines Überspannungsschutzsystems,
- Fig. 2: ein Ausführungsbeispiel eines Überspannungsschutzsystems mit einem nur schematisch dargestellten Überspannungsschutzelement,
- Fig. 3: drei verschiedene, von dem Ausführungsbeispiel nach Fig. 2 abweichende Eingangsschaltungen des zu dem erfindungsgemäßen Überspannungsschutzsystems gehörenden Zündkreises,
- Fig. 4: perspektivisch, bevorzugte Ausführungsformen der zu einem Überspannungsschutzelement eines erfindungsgemäßen Überspannungsschutzsystems gehörenden Hauptelektroden und der erfindungsgemäß vorgesehenen Zündelektroden und
- Fig. 5: schematisch und perspektivisch, zwei konkrete Realisierungsmöglichkeiten von erfindungsgemäßen Überspannungsschutzsystemen.

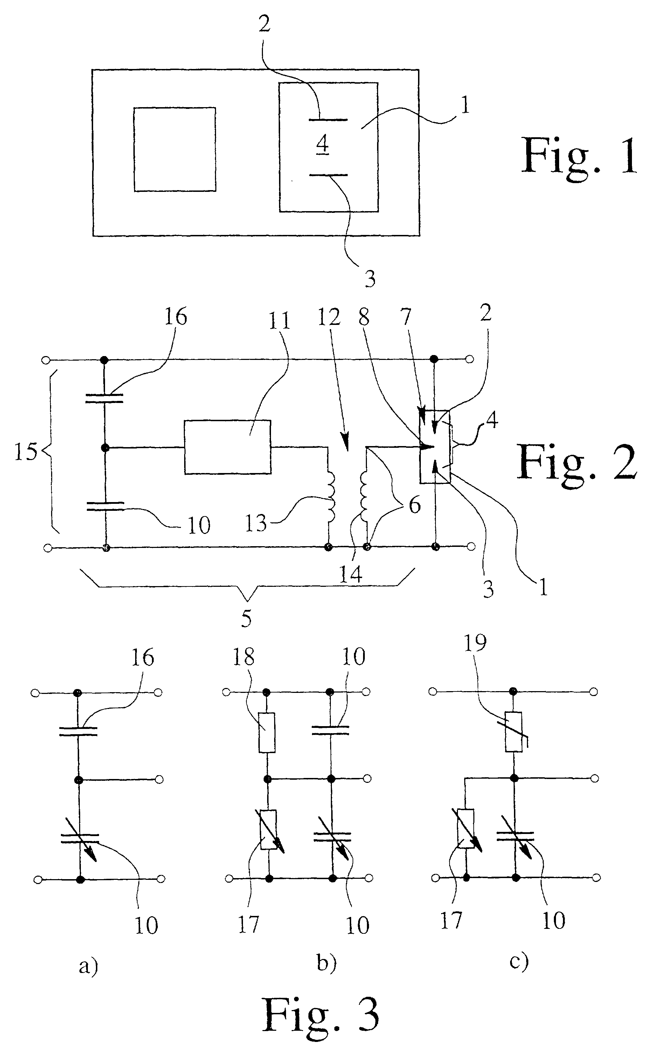

In Fig. 1 ist ein Überspannungsschutzsystem nur hinsichtlich seines prinzipiellen Aufbaus angedeutet. Zu diesem Überspannungsschutzsystem gehören ein Überspannungsschutzelement 1 und eine Zündhilfe. Das Überspannungsschutzelement 1 weist zwei Hauptelektroden 2, 3 und eine zwischen den Hauptelektroden 2, 3 wirksame Luft-Durchschlag-Funkenstrecke 4 auf. Das Überspannungsschutzelement 1 weist zwei Hauptelektroden 2, 3 und eine zwischen den Hauptelektroden 2, 3 wirksame Luft-Durchschlag-Funkenstrecke 4 auf. Das Überspannungsschutzelement 1 kann im einzelnen so realisiert sein, wie das einerseits die deutschen Offenlegungsschriften 44 02 615, 44 35 968 und/oder 44 39 730, andererseits die PHOENIX-Produktübersicht 7 "TRABTECH Überspannungsschutz", '98/99, Druckvermerk: TNR 5081956/0.0-30.9.790, Seiten 3, 6, 7, 8 und 12 bis 17, zeigen.

Für das Überspannungsschutzsystem gilt nun zunächst, wie das Fig. 2 zeigt, daß als Zündhilfe ein Zündkreis 5 mit einem Zündspannungsausgang 6 vorgesehen ist, das Überspannungsschutzelement 1 eine zwischen den Hauptelektroden 2, 3 wirksame Zündfunkenstrecke 7 mit mindestens einer Zündelektrode 8 aufweist und die Zündelektrode 8 an den Zündspannungsausgang 6 des Zündkreises 5 angeschlossen ist. Dabei weist der Zündkreis 5 im einzelnen einen Zündkondensator 10, ein Zündschaltelement 11 und einen Zündtransformator 12 auf. Der Zündtransformator 12 hat, wie üblich, eine Primärwicklung 13 und eine Sekundärwicklung 14, und die Sekundärwicklung 14 des Zündtransformators stellt den Zündspannungsausgang 6 des Zündkreises 5 dar.

Wie die Fig. 2 zeigt, gehört zu dem Zündkreis 5 eine Eingangsschaltung 15, zu der der Zündkondensator 10 gehört.

Im Ausführungsbeispiel nach Fig. 2 besteht die Eingangsschaltung 15 aus dem Zündkondensator 10 und einem Vorschaltkondensator 16; die aus dem Zündkondensator 10 und dem Vorschaltkondensator 16 bestehende Eingangsschaltung 15 ist also ein kapazitiver Spannungsteiler. Das gilt auch für das in Fig. 3 a) dargestellte Ausführungsbeispiel einer Eingangsschaltung 15. Die Eingangsschaltung 15 nach Fig. 3 a) unterscheidet sich von der Eingangsschaltung 15 nach Fig. 2 erfindungsgemäß dadurch, daß der Zündkondensator 10 einstellbar ist.

Während es sich bei dem in den Fig. 3 a) dargestellten Ausführungsbeispiel einer Eingangsschaltung 15 für den zu dem erfindungsgemäßen Überspannungsschutzsystem gehörenden Zündkreis 5 um einen kapazitiven Spannungsteiler handelt, zeigen die Fig. 3 b) und 3 c) Ausführungsbeispiele von Eingangsschaltungen 15, die als kapazitiv-ohm'sche Spannungsteiler wirksam sind. Im Ausführungsbeispiel nach Fig. 3 b) ist zunächst, wie im Ausführungsbeispiel nach Fig. 2, ein Vorschaltkondensator 16 vorgesehen. Sowohl dem Zündkondensator 10 als auch dem Vorschaltkondensator 16 ist jeweils ein Parallelwiderstand 17, 18 zugeordnet, wobei der dem Zündkondensator 10 zugeordnete Parallelwiderstand 17 einstellbar ist. Im Ausführungsbeispiel nach Fig. 3 c) ist, wie im Ausführungsbeispiel nach Fig. 3 b), dem Zündkondensator 10 ein Parallelwiderstand 17 zugeordnet. In Reihe zu der Parallelschaltung aus dem Zündkondensator 10 und dem Parallelwiderstand 17 liegt im Ausführungsbeispiel nach Fig. 3 c) ein Varistor 19.

Die Funktionsweise des in Fig. 2 dargestellten Zündkreises 5 ist dem Fachmann ohne weiteres verständlich; das gilt auch für die in den Fig. 3 a), 3 b) und 3c) dargestellten Zündkreise 5 für das erfindungsgemäße Überspannungsschutzsystem:

Erreicht die an der Eingangsschaltung 15 des Zündkreises 5 anstehende Spannung einen bestimmten Wert, so spricht das Zündschaltelement 11, bei dem es sich z. B. um eine gasgefüllte Schaltfunkenstrecke handeln kann, schlagartig an. Die Folge davon ist, daß sich der Zündkondensator 10 schlagartig über das leitend gewordene Zündschaltelement 11 und die Primärwicklung 13 des Zündtransformators 12 entläd. Der in der Primärwicklung 13 des Zündtransformators 12 entstehende schnell ansteigende Stromimpuls induziert in der Sekundärwicklung 14 des Zündtransformators 12 eine relativ hohe Spannung, die zu einem Ansprechen der Zündfunkenstrecke 7 führt. Das Ansprechen der - zumindest teilweise, vorzugsweise jedoch insgesamt - innerhalb der Luft-Durchschlag-Funkenstrecke 4 des Überspannungsschutzelementes 1 realisierten Zündfunkenstrecke 7 führt zu einer Ionisierung der in der Luft-Durchschlag-Funkenstrecken vorhandenen Luft, so daß nach einem Ansprechen der Zündfunkenstrecke 7 dann auch die Luft-Durchschlag-Funkenstrecke 4 - schlagartig - anspricht.

Das, was zuvor erläutert worden ist, führt dazu, daß auch das erfindungsgemäße Überspannungsschutzsystem bzw. das zu dem erfindungsgemäßen Überspannungsschutzsystem gehörende Überspannungsschutzelement 1 eine relativ geringe - und auch weitgehend konstante - Ansprechspannung hat.

Schließlich spricht die zu dem Überspannungsschutzelement 1 gehörende Luft-Durchschlag-Funkenstrecke 4 nicht mehr unmittelbar durch eine auftretende Überspannung an. Vielmehr führt eine auftretende Überspannung zu einem Ansprechen des zu dem Zündkreis 5 gehörenden Zündschaltelementes 11. Dieses Zündschaltelement 11, z. B. eine gasgefüllte Schaltfunkenstrecke, hat eine relativ geringe - und auch weitgehend konstante - Ansprechspannung. Da nun das Ansprechen des Zündschaltelementes 11 des Zündkreises 5 - bei einer relativ geringen und auch weitgehend konstanten Ansprechspannung - das Ansprechen der Luft-Durchschlag-Funkenstrecke 4 des Überspannungsschutzelementes 1 auslöst, wird also das Ansprechen der Luft-Durchschlag-Funkenstrecke 4 des Überspannungsschutzelementes 1 bei einer relativ geringen und auch weitgehend konstanten Ansprechspannung erfolgen. Zwischenzeitlich durchgeführte Versuche haben gezeigt, daß bei den in den Figuren dargestellten Überspannungsschutzsystemen die Luft-Durchschlag-Funkenstrecke 4 des Überspannungsschutzelementes 1 bereits bei einer Spannung von ca. 600 V anspricht.

Die in Fig. 2 sowie in den Fig. 3 a), 3 b) und 3 c) dargestellten Ausführungsbeispiele von Eingangsschaltungen 15 des Zündkreises 5 haben unterschiedliche Vorteile. Das Ausführungsbeispiel nach Fig. 2 ist besonders einfach, erlaubt jedoch keine Einstellung der Ansprechspannung. Eine solche Einstellung ist bei den bevorzugten Ausführungsbeispielen der Erfindung nach den Fig. 3 a), 3b) und 3) möglich, - im Ausführungsbeispiel nach Fig. 3 a) durch den einstellbaren Zündkondensator 10, im Ausführungsbeispiel nach Fig. 3 b) ferner durch den einstellbaren Parallelwiderstand 17 und im Ausführungsbeispiel nach Fig. 3 c) durch den einstellbaren Zündkondensator 10 und durch den einstellbaren Parallelwiderstand 17.

Die in Fig. 2 sowie in den Fig. 3 a), 3 b) und 3 c) dargestellten Ausführungsbeispiele von Eingangsschaltungen 15 für den Zündkreis 5 unterscheiden sich auch in bezug auf die Abhängigkeit der Ansprechspannung von Bauteiltoleranzen. Da - jedenfalls relativ preiswerte - Kondensatoren Bauteiltoleranzen von bis zum 20 % haben, sind die Ausführungsbeispiele nach den Fig. 2 und 3 a), weniger geeignet, wenn es darauf ankommt, nicht nur eine relativ geringe Ansprechspannung zu realisieren, sondern auch relativ genau die wirksame Ansprechspannung vorgeben zu können.

Die Ausführungsbeispiele nach den Fig. 3 b) und 3 c) sind in bezug auf Bauteiltoleranzen bei dem Zündkondensator 10 und dem Vorschaltkondensator 16 bzw. bei dem Zündkondensator 10 weniger empfindlich, weil bei diesen Ausführungsbeispielen diese Bauteiltoleranzen durch die wesentlich geringeren Bauteiltoleranzen der Parallelwiderstände 17 und 18 bzw. des Parallelwiderstandes 17 relativiert werden.

Die in den Ausführungsbeispielen nach den Fig. 3 a), 3 b) und 3 c) erfindungsgemäß vorgesehene Einstellbarkeit im Bereich der Eingangsschaltung 15, einstellbarer Zündkondensator 10 im Ausführungsbeispiel nach Fig. 3 a), ferner einstellbarer Parallelwiderstand 17 im Ausführungsbeispiel nach Fig. 3 b) sowie einstellbarer Zündkondensator 10 und einstellbarer Parallelwiderstand 17 im Ausführungsbeispiel nach Fig. 3 c), gibt die Möglichkeit, werkseitig Bauteiltoleranzen durch entsprechende Einstellungen zu eliminieren.

Besonders vorteilhaft ist das in den Fig. 3 c) dargestellte Ausführungsbeispiel einer Eingangsschaltung 15 für den Zündkreis 5, also das Ausführungsbeispiel, bei dem in Reihe zu der Parallelschaltung aus dem Zündkondensator 10 und dem Parallelwiderstand 17 ein Varistor 19 liegt. Bei diesem Ausführungsbeispiel können Bauteiltoleranzen praktisch vernachlässigt werden, und es ist eine relativ hohe Betriebsspannung bei einem kleinen Schutzpegel möglich.

Im Ausführungsbeispiel nach Fig. 3 c) ist der Zündkondensator 10 einstellbar und liegt parallel zu dem einstellbaren Zündkondensator 10 ein einstellbarer Parallelwiderstand.

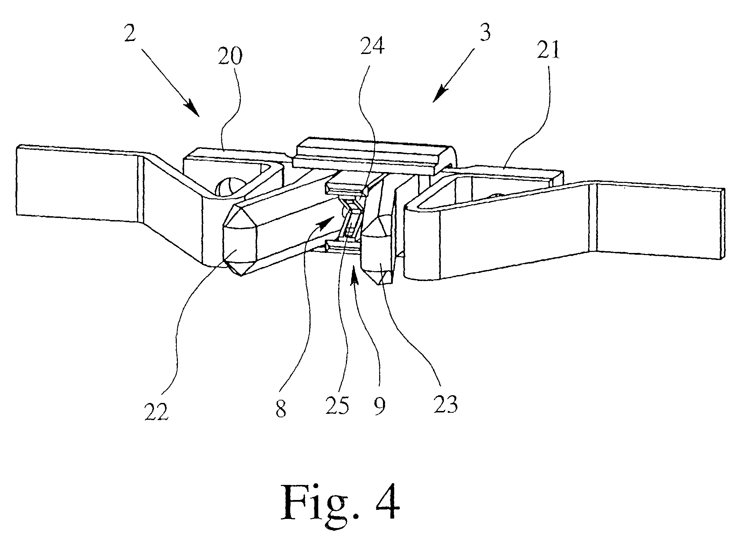

Bisher sind die dargestellten Überspannungsschutzsysteme nur in Verbindung mit einer Zündelektrode 8 erläutert worden; bei dem Ausführungsbeispiel nach Fig. 2 ist auch nur eine Zündelektrode 8 angedeutet. Vorzugsweise gilt fiir das erfindungsgemäße Überspannungsschutzsystem jedoch, wie die Fig. 4 zeigt, daß das Überspannungsschutzelement 1 - zusätzlich zu den beiden Hauptelektroden 2 und 3 - zwei Zündelektroden 8, 9 aufweist.

Das in Fig. 4 dargestellte Elektrodensystem - zwei Hauptelektroden 2, 3 und zwei Zündelektroden 8, 9 - geht von einem Überspannungsschutzelement aus, wie es einerseits durch die deutschen Offenlegungsschriften 44 02 615, 44 35 968 und 44 39 730, andererseits durch die PHOEMX-Produktübersicht 7 "TRABTECH-Überspannungsschutz", '98/99, Druckvermerk: TNR 5081956/0.0-30.9.790, Seiten 3, 6, 7, 8 und 12 bis 17, bekannt ist. Dabei hat jede Hauptelektrode 2, 3 einen Anschlußschenkel 20, 21 und jeweils ein unter einem spitzen Winkel zu dem Anschlußschenkel 20, 21 verlaufendes Funkenhorn 22, 23, wobei die Funkenhörner 22, 23 der beiden - mit Abstand zueinander angeordneten - Hauptelektroden 2, 3 zusammen die Luft-Durchschlag-Funkenstrecke 4 bilden. In dem in Fig. 4 dargestellten Ausführungsbeispiel sind nun die beiden Zündelektroden 8, 9 vergleichbar realisiert wie die Hauptelektroden 2, 3; wie zu den Hauptelektroden 2, 3 Funkenhörner 22, 23 gehören, gehören zu den Zündelektroden 8, 9 Funkenhörner 24, 25. Im einzelnen ist die Anordnung der Zündelektroden 8, 9 relativ zu den Hauptelektroden 2, 3, wie dies die Fig. 4 ohne weiteres zeigt, so getroffen, daß das aus den Zündelektroden 8, 9 bestehende Zündelektroden-System um 90° versetzt ist gegenüber dem aus den Hauptelektroden 2, 3 bestehenden Hauptelektroden-System.

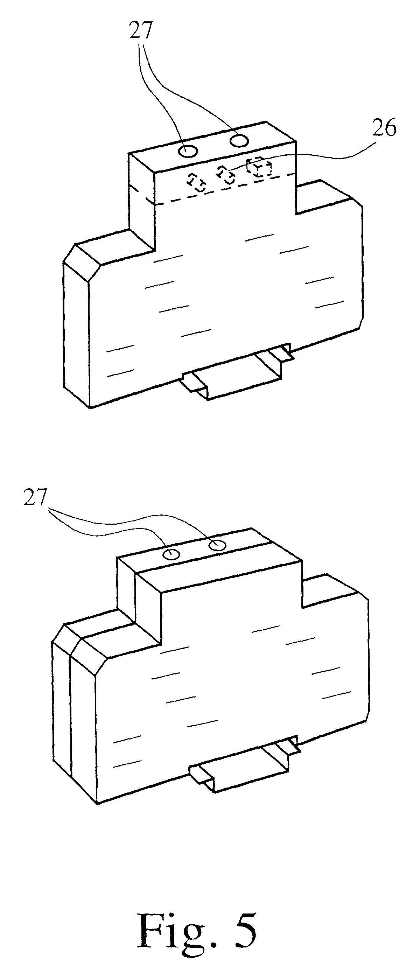

Wie sich aus den vorangegangenen Ausführungen ergibt, besteht das erfindungsgemäße Überspannungsschutzsystem aus einem fiir sich zunächst bekannten, jedoch abgewandelten Überspannungsschutzelement 1 und zusätzlich aus dem im einzelnen erläuterten Zündkreis 5. Der Zündkreis 5 kann insgesamt auf einer Platine 26 realisiert sein, die entweder oberhalb oder seitlich eines in seinen äußeren Abmessungen bekannten Überspannungsschutzelementes 1 untergebracht sein kann. Das ist in Fig. 5 angedeutet, - in Fig. 5 a) für die erste Alternative, in Fig. 5 b) für die zweite Alternative. Beiden Alternativen sind Vor- und Nachteile eigen. Bei der ersten Alternative ergibt sich eine größere Bauhöhe bei gleichbleibender Baubreite. Bei der zweiten Alternative wird eine gleichbleibende Bauhöhe mit einer größeren Baubreite erkauft.

In Verbindung mit der Erläuterung der verschiedenen Ausführungsbeispiele der Eingangsschaltung 15 des Zündkreises 5 des erfindungsgemäßen Überspannungsschutzsystems ist darauf hingewiesen worden, daß bei den bevorzugten Ausfiihrungsbeispielen der Erfindung nach den Fig. 3 a), 3 b) und 3 c) einstellbare Bauelemente vorgesehen sind, - beim Ausführungsbeispiel nach Fig. 3 a) ein einstellbarer Zündkondensator, beim Ausführungsbeispiel nach Fig. 3 b) ferner ein einstellbarer Parallelwiderstand 17 und beim Ausführungsbeispiel nach Fig. 3 c) ein einstellbarer Zündkondensator 10 und ein einstellbarer Parallelwiderstand 17. Sollen diese Ausführungsbeispiele realisiert werden, muß natürlich dafür gesorgt sein, daß die einstellbaren Bauelemente von außen einstellbar sind. Das das erfindungsgemäße Überspannungsschutzsystem insgesamt umfassende Gehäuse muß also entsprechende Einstellöffnungen 27 haben, die eine Einstellung der einstellbaren Bauelemente mit Hilfe eines Schraubendrehers ermöglichen. Vorzugsweise kann auch eine nicht dargestellte Skala vorgesehen sein, so daß der Verwender eines erfindungsgemäßen Überspannungsschutzsystems die Ansprechspannung mit Hilfe einer solchen Skala einstellen kann.

## Patentansprüche

1. Überspannungsschutzsystem mit einem Überspannungsschutzelement (1) und einer das Überspannungsschutzelement (1) auslösenden Zündhilfe, wobei das Überspannungsschutzelement (1) zwei Hauptelektroden (2, 3) und eine zwischen den Hauptelektroden (2, 3) wirksame Luft-Durchschlag-Funkenstrecke (4) aufweist, als Zündhilfe ein Zündkreis (5) mit einem Zündspannungsausgang (6) vorgesehen ist, das Überspannungsschutzelement (1) eine zwischen den Hauptelektroden (2, 3) wirksame Zündfunkenstrecke (7) mit mindestens einer Zündelektrode (8) aufweist und die Zündelektrode (8) an den Zündspannungsausgang (6) des Zündkreises (5) angeschlossen ist, der Zündkreis (5) einen Zündkondensator (10), ein Zündschaltelement (11) sowie einen Zündtransformator (12) aufweist, der Zündkreis (5) eine Eingangsschaltung (15) aufweist und die Eingangsschaltung (15) als ein den Zündkondensator (10) aufweisender Spannungsteiler ausgebildet ist, so daß die über den Zündkondensator (10) anliegende Spannung gegenüber der an der Eingangsschaltung (15) anstehenden Spannung heruntergeteilt ist, **dadurch gekennzeichnet, daß** der Zündkondensator (10) einstellbar ist.

2. Überspannungsschutzsystem nach Anspruch 1, **dadurch gekennzeichnet, daß** die Eingangsschaltung (15) aus dem Zündkondensator (10) und einem in Reihe zu dem Zündkondensator (10) liegenden Vorschaltkondensator (16) besteht.

3. Überspannungsschutzsystem nach Anspruch 1, **dadurch gekennzeichnet, daß** die Eingangsschaltung (15) aus dem Zündkondensator (10), einem in Reihe zu dem Zündkondensator (10) liegenden Vorschaltkondensator (16), einem dem Zündkondensator (10) zugeordneten Parallelwiderstand (17) und einem dem Vorschaltkondensator (16) zugeordneten Parallelwiderstand (18) besteht.

4. Überspannungsschutzsystem nach Anspruch 1, **dadurch gekennzeichnet, daß** die Eingangsschaltung (15) aus dem Zündkondensator (10) und einem in Reihe zu dem Zündkondensator (10) liegenden Varistor (19) besteht.

5. Überspannungsschutzsystem nach Anspruch 1, **dadurch gekennzeichnet, daß** die Eingangsschaltung (15) aus dem Zündkondensator (10), einem dem Zündkondensator (10) zugeordneten Parallelwiderstand (17) und einem mit der Parallelschaltung aus dem Zündkondensator (10) und dem Parallelwiderstand (17) in Reihe liegenden Varistor (19) besteht.

6. Überspannungsschutzsystem nach einem der Ansprüche 1 bis 5, **dadurch gekennzeichnet, daß** der dem Zündkondensator (10) zugeordnete Parallelwiderstand (17) einstellbar ist.

7. Überspannungsschutzsystem nach einem der Ansprüche 1 bis 6, **dadurch gekennzeichnet, daß** als Zündschaltelement (11) eine gasgefüllte Schaltfunkenstrecke vorgesehen ist.

8. Überspannungsschutzsystem nach einem der Ansprüche 1 bis 7, **dadurch gekennzeichnet, daß** das Überspannungsschutzelement (1) zwei Zündelektroden (8, 9) aufweist.

9. Überspannungsschutzsystem nach Anspruch 8, **dadurch gekennzeichnet, daß** die durch die beiden Zündelektroden (8, 9) gebildete Zündfunkenstrecke (7) - zumindest teilweise, vorzugsweise ganz - innerhalb der - durch die beiden Hauptelektroden (2,3) gebildeten Luft-Durchschlag-Funkenstrecke (4) realisiert ist.

10. Überspannungsschutzsystem nach Anspruch 8 oder 9, **dadurch gekennzeichnet, daß** jede Hauptelektrode (2, 3) einen Anschlußschenkel (20, 21) und ein unter einem spitzen Winkel zu dem Anschlußschenkel (20, 21) verlaufendes Funkenhorn (22, 23) aufweist, die Funkenhörner (22, 23) der beiden - mit Abstand zueinander angeordneten - Hauptelektroden (2, 3) zusammen die Luft-Durchschlag-Funkenstrecke bilden und die Zündelektroden (8, 9) den Funkenhörnern (22, 23) der Hauptelektroden (2, 3) entsprechende Funkenhörner (24, 25) aufweisen.

11. Überspannungsschutzsystem nach einem der Ansprüche 8 bis 10, **dadurch gekennzeichnet, daß** das aus den Zündelektroden (8, 9) bestehende Zündelektroden-System gegenüber dem aus den Hauptelektroden (2, 3) bestehenden Hauptelektroden-System um 90° versetzt ist.

## Claims

1. Overvoltage protection system with an overvoltage protection element (1) and an ignition aid for triggering the overvoltage protection element (1), the overvoltage protection element (1) having two main electrodes (2, 3) and an air-breakdown spark gap (4) between the main electrodes (2, 3); wherein the ignition aid comprises an ignition circuit (5) with an ignition voltage output (6), the overvoltage protection element (1) has at least one ignition electrode (8) in an ignition spark gap (7) between the main electrodes (2, 3), the ignition electrode (8) being connected to the ignition voltage output (6) of the ignition circuit (5), the ignition circuit (5) comprising an ignition capacitor (10), an ignition switching element (11) and an ignition transformer (12), the ignition capacitor (5) being part of an input circuit (15) and the input circuit (15) being designed as a voltage divider having an ignition capacitor (10), so that the voltage from the ignition capacitor (10) is divided as opposed to the voltage on the input circuit (15), **characterized in that** the ignition capacitor (10) is adjustable.

2. Overvoltage protection system according to claim 1, **characterized in that** the input circuit (15) comprises an ignition capacitor (10) and a series capacitor (16) which is in series with the ignition capacitor (10).

3. Overvoltage protection system according to claim 1, **characterized in that** the input circuit (15) comprises an ignition capacitor (10), a series capacitor (16) which is in series with the ignition capacitor (10), a parallel resistor (17) assigned to the ignition capacitor (10) and a parallel resistor (18) assigned to the series capacitor (16).

4. Overvoltage protection system according to claim 1, **characterized in that** the input circuit (15) comprises an ignition capacitor (10) and a varistor (19) which is in series with the ignition capacitor (10).

5. Overvoltage protection system according to claim 1, **characterized in that** the input circuit (15) comprises an ignition capacitor (10), a parallel resistor (17) assigned to the ignition capacitor (10) and a varistor (19) which is in a series with the parallel circuit from the ignition capacitor (10) and the parallel resistor (17).

6. Overvoltage protection system according to any one of claims 1 to 5, **characterized in that** the parallel resistor (17) assigned to the ignition capacitor (10) is adjustable.

7. Overvoltage protection system according to any one of claims 1 to 6, **characterized in that** a gas-filled switching spark gap is provided as the ignition switching element (11).

8. Overvoltage protection system according to any one of claims 1 to 7, **characterized in that** the overvoltage protection element (1) has two ignition electrodes (8, 9).

9. Overvoltage protection system according to claim 8, **characterized in that** the ignition spark gap (7) formed by the two ignition electrodes (8, 9) is realized - at least partially, preferably entirely - within the air-discharge spark gap (4) formed by both the main electrodes (2, 3).

10. Overvoltage protection system according to claim 8 or 9, **characterized in that** each main electrode (2, 3) has a connecting leg (20, 21) and an arcing horn (22, 23) which runs at an acute angle with respect to the connecting leg (20, 21), wherein the arcing horns (22, 23) of the two main electrodes (2, 3) are located at a distance from one another and together form the air-discharge spark gap (4), and that the ignition electrodes (8, 9) have arcing horns (24, 25) which correspond to the arcing horns (22, 23) of the main electrode (2, 3).

11. Overvoltage protection system according to any one of claims 8 to 10, **characterized in that** the ignition electrode system comprising the ignition electrodes (8, 9) is offset by 90 degrees relative to the main electrode system comprising the main electrodes (2, 3)

## Revendications

1. Dispositif de protection contre les surtensions avec un élément parasurtension (1) et un auxiliaire d'amorçage qui déclenche cet élément, l'élément parasurtension (1) présentant deux électrodes principales (2, 3) et un éclateur de claquage à air (4) agissant entre ces deux électrodes (2, 3), un circuit d'amorçage (5) avec une sortie de tension de claquage (6) étant prévu comme auxiliaire d'amorçage, l'élément parasurtension (1) présentant un éclateur à étincelle (7) agissant entre les électrodes principales et présentant au moins une électrode d'amorçage (8) et cette électrode d'amorçage (8) étant connectée à la sortie de tension de claquage (6) du circuit d'amorçage (5), ce dernier présentant un condensateur d'amorçage (10), un contacteur d'amorçage (11), un transformateur d'amorçage (12) ainsi qu'un circuit d'entrée (15) lequel est configuré comme un diviseur de tension présentant le condensateur d'amorçage (10) de sorte que la tension appliquée par le condensateur d'amorçage (10) est réduite par division par rapport à la tension arrivant sur le circuit d'entrée (15), **caractérisé en ce que** le condensateur d'amorçage (10) est réglable.

2. Dispositif de protection contre les surtensions selon la revendication 1 **caractérisé en ce que** le circuit d'entrée (15) est composé du condensateur d'amorçage (10) et d'une capacité additionnelle (16) disposée en série avec le condensateur d'amorçage (10).

3. Dispositif de protection contre les surtensions selon la revendication 1 **caractérisé en ce que** le circuit d'entrée (15) est composé du condensateur d'amorçage (10), d'une capacité additionnelle (16) disposée en série avec le condensateur d'amorçage (10), d'une résistance parallèle (17) affectée au condensateur d'amorçage (10) et d'une résistance parallèle (18) affectée à la capacité additionnelle (16).

4. Dispositif de protection contre les surtensions selon la revendication 1 **caractérisé en ce que** le circuit d'entrée (15) est composé du condensateur d'amorçage (10) et d'un varistor (19) disposé en série avec le condensateur d'amorçage (10).

5. Dispositif de protection contre les surtensions selon la revendication 1 **caractérisé en ce que** le circuit d'entrée (15) est composé du condensateur d'amorçage (10), d'une résistance parallèle (17) affectée au condensateur d'amorçage (10) et d'un varistor (19) disposé en série avec le montage parallèle que forment le condensateur d'amorçage (10) et la résistance parallèle (17).

6. Dispositif de protection contre les surtensions selon l'une des revendications 1 à 5 **caractérisé en ce que** la résistance parallèle (17) affectée au condensateur d'amorçage (10) est réglable.

7. Dispositif de protection contre les surtensions selon l'une des revendications 1 à 6 **caractérisé en ce qu'**on prévoit un éclateur rempli au gaz comme contacteur d'amorçage (11).

8. Dispositif de protection contre les surtensions selon l'une des revendications 1 à 7 **caractérisé en ce que** l'élément parasurtension (1) présente deux électrodes d'amorçage (8, 9).

9. Dispositif de protection contre les surtensions selon la revendication 8 **caractérisé en ce que** l'éclateur à étincelle (7) formé par les deux électrodes d'amorçage (8, 9) est agencé, au moins partiellement mais de préférence en intégralité, à l'intérieur de l'éclateur de claquage à air (4) formé par les deux électrodes principales (2, 3).

10. Dispositif de protection contre les surtensions selon la revendication 8 ou 9 **caractérisé en ce que** chaque électrode principale (2, 3) présente une branche de connexion (20, 21) et un cornet électromagnétique (22, 23) formant un angle aigu avec elle (20, 21), les cornets électromagnétiques (22, 23) des deux électrodes principales (2, 3), situées à distance l'une de l'autre, formant ensemble l'éclateur de claquage à air, et les électrodes d'amorçage (8, 9) présentant des cornets électromagnétiques (24, 25) qui correspondent aux cornets électromagnétiques (22, 23) des électrodes principales (2, 3).

11. Dispositif de protection contre les surtensions selon l'une des revendications 8 à 10 **caractérisé en ce que** le dispositif d'électrodes d'amorçage constitué par les électrodes d'amorçage (8, 9) est décalé de 90° par rapport au dispositif d'électrodes principales constitué par les électrodes principales (2, 3).
